# EUROPEAN PATENT SPECIFICATION

(11) **EP 2 421 327 B1**
(45) Date of publication and mention of the grant of the patent: **10.05.2017**
(21) Application number: 09843239.6
(22) Date of filing: 16.11.2009
(51) Int. Cl.: H04W 76/02

(54) **METHOD FOR IMPLEMENTING COMMUNICATION WITH DIRECT MODE OPERATION AND DIGITAL CLUSTER TERMINAL**
VERFAHREN ZUM IMPLEMENTIEREN VON KOMMUNIKATION MIT DIREKTMODUSBETRIEB UND DIGITALCLUSTERENDGERÄT
PROCÉDÉ DE MISE EN OEUVRE DE COMMUNICATION AVEC FONCTIONNEMENT EN MODE DIRECT ET TERMINAL DE GRAPPE NUMÉRIQUE

(30) Priority: 14.04.2009 CN 200910130078
(43) Date of publication of application: 22.02.2012
(73) Proprietor: ZTE Corporation, Shenzhen, Guangdong 518057 (CN)
(72) Inventor: WANG, Shaoxing, Shenzhen Guangdong 518057 (CN); WANG, Wu, Shenzhen Guangdong 518057 (CN); YANG, Hui, Shenzhen Guangdong 518057 (CN)
(74) Representative: RGTH
(86) International application number: PCT/CN2009/074967
(87) International publication number: WO 2010/118605

(56) References cited:
- EP-A1- 1 564 943
- EP-A2- 1 538 854
- CN-A- 1 993 898
- CN-A- 101 527 971
- "Terrestrial Trunked Radio (TETRA); Voice plus Data (V+D); Designers' guide; Part 3: Direct Mode Operation (DMO); ETSI TR 102 300-3", IEEE, LIS, SOPHIA ANTIPOLIS CEDEX, FRANCE, vol. TETRA-1, no. V1.3.0, 1 June 2007 (2007-06-01), XP014038659, ISSN: 0000-0001
- "Terrestrial Trunked Radio (TETRA); Technical requirements for Direct Mode Operation (DMO); Part 10: Managed Direct Mode Operation (M-DMO); ETSI EN 300 396-10", IEEE, LIS, SOPHIA ANTIPOLIS CEDEX, FRANCE, vol. TETRA-2, no. V1.1.2, 1 August 2002 (2002-08-01), XP014001357, ISSN: 0000-0001
- "Terrestrial Trunked Radio (TETRA); Direct Mode Operation (DMO); Part 6: Security", ETS 300 396-6, XX, XX, 3 April 1998 (1998-04-03), pages 1-79, XP002256247,

## Description

### TECHNICAL FIELD

The present invention relates to the digital trunking field, specifically to a method and a digital trunking terminal for implementing communication with Direct Mode Operation (DMO).

### BACKGROUND

As a significant branch of a mobile communication system, a digital trunking communication system is a mobile communication system applied to group scheduling and commanding communication. Compared to a public mobile communication network represented by a Global System for Mobile Communication (GSM), the digital trunking communication system is featured with private calling, group calling, priority calling and emergency calling services, additionally short calling establishment duration and end-to-end channel time delay, which is particularly suitable for communication scheduling during emergency, and can be efficiently used by departments with a high requirement on commanding and scheduling functions, such as enterprises and institutions, mines, oilfields, farms, public security organs, armed police and army. Currently, the digital trunking communication system is used as an infrastructural communication platform for the urban emergency response coordination system of our country.

Direct Mode Operation (DMO) is a technology for enabling a mobile station to realize short range direct communication under a situation that there is no network coverage or network service is interrupted, thus the DMO is considered to be a significant supplement for trunking communication. Unfortunately, DMO communication can not be implemented by a digital trunking terminal of a current digital trunking communication system, thus how to enable the digital trunking terminal to implement DMO communication turns out to be a technical problem to be solved.

D1: the present document is written as a "Read-me-first" manual or "Getting started with TETRA DMO". It is not intended to be a guide to the TETRA DMO standard nor an authoritative interpretation of the standard. If any conflict is found between the present document and the corresponding sections in the TETRA standard then the standard takes precedence. The scope of this second version of the DMO Designers' adds detailed consideration of repeaters and gateways to the detailed consideration of mobile station to mobile station direct mode operation which was covered in the first edition.

D2: the multi-part deliverable ETS/EN 300 396 defines the Terrestrial Trunked Radio(TETRA) Direct Mode Operation(DMO). It specifies the basic air interface, the interworking between Direct Mode(DM) groups via repeaters, and interworking with the TETRA Voice plus Data(V+D) system via gateways. It also specifies the security aspects in TETRA DMO, and the intrinsic services that are supported in addition to the basic bearer and teleservices.

D3: this ETS defines the Terrestrial Trunked Radio system (TETRA) Direct Mode of operation. It specifies the basic Air Interface(AI), the interworking between Direct Mode groups via Repeaters, and the interworking with the TETRA trunked system via Gateways. It also specifies the security aspects in TETRA Direct Mode, and the intrinsic services that are supported in addition to the basic bearer and teleservices. The use of AI encryption gives confidentiality protection against eavesdropping only. The addition of a synchronized time variant initialization value for the encryption algorithm gives a restrictive degress of replay protection.

### SUMMARY

The technical problem to be solved by the present invention is to provide a method and a digital trunking terminal for implementing Direct Mode Operation (DMO) communication, in order to implement DMO communication on the digital trunking terminal.

To solve the aforementioned problem, the present invention provides a method for implementing Direct Mode Operation (DMO) communication on a digital trunking terminal, comprises:
after the digital trunking terminal is started and when a DMO controlling module thereof receives a DMO starting command sent by a user through a User Interface (UI) module, sending a close instruction by the DMO controlling module to a digital trunking radio frequency module so as to close the digital trunking radio frequency module, when the digital trunking radio frequency module is closed, sending, by the DMO controlling module, an open instruction to a DMO radio frequency module to open the DMO radio frequency module; establishing by the DMO controlling module a connection with a DMO controlled module, and informing by the DMO controlling module the UI module by the DMO controlling module after the connection is established successfully; sending, by the UI module, a subaudio frequency, a squelch level and a frequency point information which is set by the user to the DMO controlled module through the DMO controlling module; setting by the DMO controlled module, the subaudio frequency, the squelch level and a frequency parameter of itself to be the subaudio frequency, the squelch level and the frequency point information received from the DMO controlling module; and the digital trunking terminal enters into a DMO communication free state.

Further, the method may comprise: sending by the DMO controlled module a group setting success response to the UI module through the DMO controlling module after the DMO controlled module sets the parameter successfully; and
prompting by the UI module the user that the digital trunking terminal has entered the DMO communication free state after the UI module receives the group setting success response.

Further, the method may comprise the following features:
the establishing by the DMO controlling module the connection with the DMO controlled module may specifically comprise:
   when the DMO controlling module receives the DMO starting command sent by the user through the UI module, opening the DMO controlled module and a serial port connected with the DMO controlled module; and
   sending by the DMO controlling module a connection command to the DMO controlled module through the serial port.

Further, the method may comprise:
if the DMO controlled module is failed to set the parameter, sending a group setting failure response to the DMO controlling module; and
sending the group setting failure response to the UI module, closing the DMO controlled module and the DMO radio frequency module, and instructing to open the digital trunking radio frequency module by the DMO controlling module.

Further, the method may comprise the following features:
the DMO controlling module instructs the serial port to perform initialization after the digital trunking terminal is started and before the DMO controlling module opens the serial port connected with the DMO controlled module.

Further, the method may comprise the following features:
the informing the UI module by the DMO controlling module after the connection is established successfully may specifically comprise:
   informing the UI module by the DMO controlling module that the connection has been established successfully after the DMO controlling module receives a connection command response from the DMO controlled module.

Further, the method may comprise the following features:
the digital trunking terminal is equipped with a connection timer, and the connection timer is preset with a connection timeout and connection timeout times;
the DMO controlling module starts the connection timer when sending the connection command to the DMO controlled module; and
the establishing by the DMO controlling module the connection with the DMO controlled module specifically comprises:
   sending the connection command to the DMO controlled module by the DMO controlling module and determining by the DMO controlling module whether the connection command response returned by the DMO controlled module is received within the connection timeout, if the connection command response returned by the DMO controlled module is received within the connection timeout, it indicates that the DMO controlling module has successfully established the connection with the DMO controlled module;
   if the connection command response returned by the DMO controlled module has not been received yet when the connection timeout is up, determining whether times of sending the connection command are beyond the connection timeout times, if beyond, it indicates that the DMO controlling module is failed to establish the connection with the DMO controlled module, if not, the sending of the connection command and the subsequent determining flow are repeated.

To solve the technical problem, the present invention further provides a digital trunking terminal for implementing Direct Mode Operation (DMO) communication; the digital trunking terminal comprises: a User Interface (UI) module, a DMO controlling module, a DMO controlled module, a DMO radio frequency module and a digital trunking radio frequency module;
the UI module is adapted to send a DMO starting command sent by a user to the DMO controlling module; and further adapted to send a subaudio frequency, a squelch level and a frequency point information which is set by the user to the DMO controlling module after being informed that the DMO controlling module has successfully established a connection with the DMO controlled module;
the DMO controlling module is adapted to send a close instruction to the digital trunking radio frequency module so as to close the digital trunking radio frequency module, after receiving the DMO starting command, and send an open instruction to the DMO radio frequency module to open the DMO radio frequency module, when the digital trunking radio frequency module is closed; and establish a the connection with the DMO controlled module; further adapted to inform the UI module after the connection is established successfully; further adapted to send the subaudio frequency, the squelch level and the frequency point information received from the UI module to the DMO controlled module;
the DMO controlled module is adapted to set the subaudio frequency, the squelch level and a frequency parameter of itself to be the subaudio frequency, the squelch level and the frequency point information received from the DMO controlling module, and enter a DMO communication free state.

Further, the digital trunking terminal may comprise the following features:
the DMO controlled module is further adapted to send a group setting success response to the DMO controlling module after setting the parameter of itself successfully;
the DMO controlling module is further adapted to send the received group setting success response to the UI module; and
the UI module is further adapted to prompt the user that the digital trunking terminal has entered the DMO communication free state after receiving the group setting success response.

Further, the digital trunking terminal may comprise the following features:
the DMO controlling module is further adapted to open the DMO controlled module and a serial port connected with the DMO controlled module when receiving the DMO starting command sent by the user through the UI module; and further adapted to send a connection command to the DMO controlled module through the serial port.

Further, the digital trunking terminal may comprise the following features:
the DMO controlled module is further adapted to send a group setting failure response to the DMO controlling module when failing to set the parameter of itself; and
the DMO controlling module is further adapted to send the group setting failure response to the UI module, close the DMO controlled module and the DMO radio frequency module, and instruct to open the digital trunking radio frequency module.

Further, the digital trunking terminal may comprise the following features:
the DMO controlling module is further adapted to instruct the serial port to perform initialization.

Further, the digital trunking terminal may comprise the following features:
the DMO controlling module is further adapted to inform the UI module that the connection has been established successfully after receiving a connection command response from the DMO controlled module.

Further, the digital trunking terminal may comprise the following features:
the digital trunking terminal further comprises a connection timer, and the connection timer is preset with a connection timeout and connection timeout times;
the DMO controlling module is further adapted to start the connection timer when sending the connection command to the DMO controlled module; and
the DMO controlling module is further adapted to send the connection command to the DMO controlled module and determine whether the connection command response returned by the DMO controlled module is received within the connection timeout, if the connection command response returned by the DMO controlled module is received within the connection timeout, it indicates that the DMO controlling module has successfully established the connection with the DMO controlled module, if the connection command response returned by the DMO controlled module has not been received yet when the connection timeout is up, the DMO controlling module determines whether the times of sending the connection command are beyond the connection timeout times, if beyond, it indicates that the DMO controlling module is failed to establish the connection with the DMO controlled module, if not, the connection command is sent again to the DMO controlled module.

Compared to current technology, the present invention is capable of implementing DMO communication on a digital trunking terminal.

### BRIEF DESCRIPTION OF THE DRAWINGS

Fig. 1 shows a flow chart of a method for implementing DMO communication on a digital trunking terminal according to an embodiment of the present invention; and
Fig. 2 shows the digital trunking terminal for implementing DMO communication according to an embodiment of the present invention.

### DETAILED DESCRIPTION OF THE INVENTION

The following describes detailed implementation of the present invention, preferred but not limited.

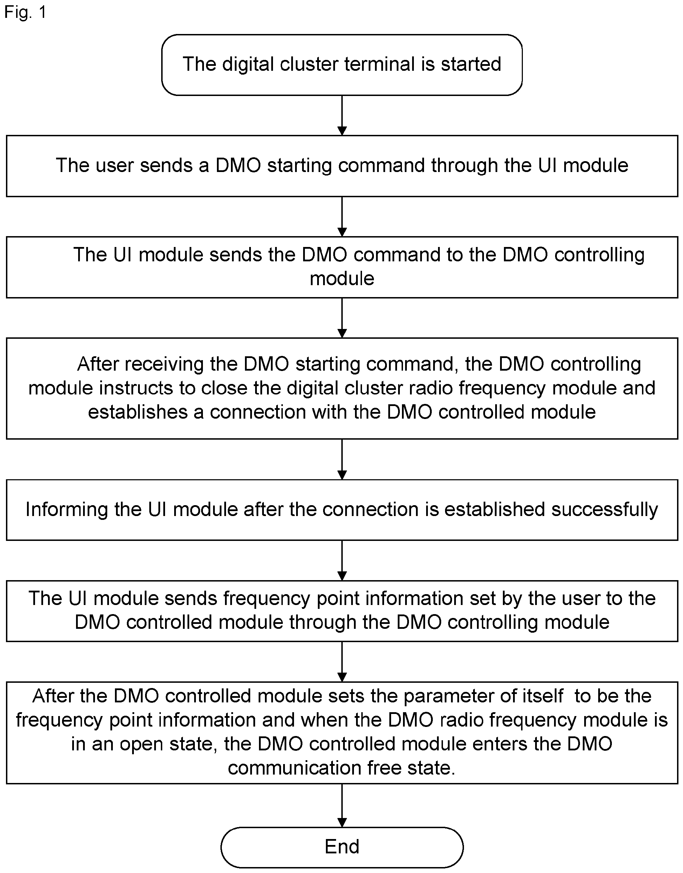

As shown in Fig. 1, the main idea of the present invention is: after a digital trunking terminal is started, when a DMO controlling module receives a DMO starting command sent by a user through a User Interface (UI) module, the DMO controlling module instructs to close a digital trunking radio frequency module, and establishes a connection with a DMO controlled module and informs the UI module after the connection is established successfully; and the UI module sends frequency point information set by the user to the DMO controlled module through the DMO controlling module, and after the DMO controlled module sets a parameter of itself to be the frequency point information and when a DMO radio frequency module is in an open state, the digital trunking terminal enters a DMO communication free state, wherein the DMO controlling module instructs to open the DMO radio frequency module in any step after instructing to close the digital trunking radio frequency module.

After the parameter is set successfully by the DMO controlled module itself, the DMO controlled module may also send a group setting success response to the UI module through the DMO controlling module; and after receiving the group setting success response, the UI module prompts the user that the digital trunking terminal has entered the DMO communication free state.

Further, the DMO controlling module establishing a connection with the DMO controlled module may specifically comprise:
the DMO controlling module opens the DMO controlled module and a serial port connected with the DMO controlled module, wherein the serial port may be a Universal Asynchronous Receiver/Transmitter (UART) serial port; and the DMO controlling module sends a connection command to the DMO controlled module through the serial port. Further, before the serial port is opened, the DMO controlling module is required to instruct the serial port to perform initialization.

After the DMO controlling module receives a connection command response from the DMO controlled module, it is considered that the connection between the two has been established successfully.

If the DMO controlled module is failed to set the parameter, the DMO controlled module sends a group setting failure response to the DMO controlling module; the DMO controlling module sends the group setting failure response to the UI module, and closes the DMO controlled module and the DMO radio frequency module, instructs to open the digital trunking radio frequency module.

To guarantee validation of the connection, a connection timer, which is preset with a connection timeout and connection timeout times, can be configured in the digital trunking terminal. When the DMO controlling module sends a connection command to the DMO controlled module, the connection timer is started; then the DMO controlling module determines whether the connection command response returned by the DMO controlled module is received within the connection timeout, if the connection command response returned by the DMO controlled module is received within the connection timeout, it indicates that the DMO controlling module has successfully established the connection with the DMO controlled module, if the connection command response returned by the DMO controlled module has not been received yet by the DMO controlling module when the connection timeout is up, then the DMO controlling module determines whether the times of sending the connection command are beyond the connection timeout times, if beyond, it indicates that the DMO controlling module is failed to establish the connection with the DMO controlled module, if not, the sending of the connection command and the subsequent determining flow are repeated.

For instance, the connection timeout preset in the connection timer is 30ms, and the connection timeout times are set as 3; the sending of the connection command and the determining flow are as following:
(1) the DMO controlling module sends the connection command to the DMO controlled module, starts the connection timer, and the timer starts timing;
(2) if the DMO controlling module determines that the connection command response returned by the DMO controlled module is received within 30ms, it indicates that the connection between the DMO controlling module and the DMO controlled module has been established successfully, and the sending of the connection commanding is terminated; and
(3) if the DMO controlling module has not received the connection command response returned by the DMO controlled module yet when the connection timer times out, the DMO controlling module determines whether the times of sending the connection command are beyond the preset connection timeout times (3 times), if not, then step (1) is repeated, if beyond, namely the DMO controlling module has sent the connection command to the DMO controlled module for 4 times, it indicates that the DMO controlling module is failed to establish the connection with the DMO controlled module, then this flow is terminated.

Except for the frequency point information, the UI module may also send a subaudio frequency and a squelch level to the DMO controlled module through the DMO controlling module; the DMO controlled module sets a parameter of itself according to the three parameters. After the digital trunking terminal enters the DMO communication free state, it can implement DMO communication with an opposite end through the DMO radio frequency module at the frequency point, wherein the opposite end is capable of sending a signal which has the same subaudio frequency as that of the digital trunking terminal and satisfies the squelch level thereof.

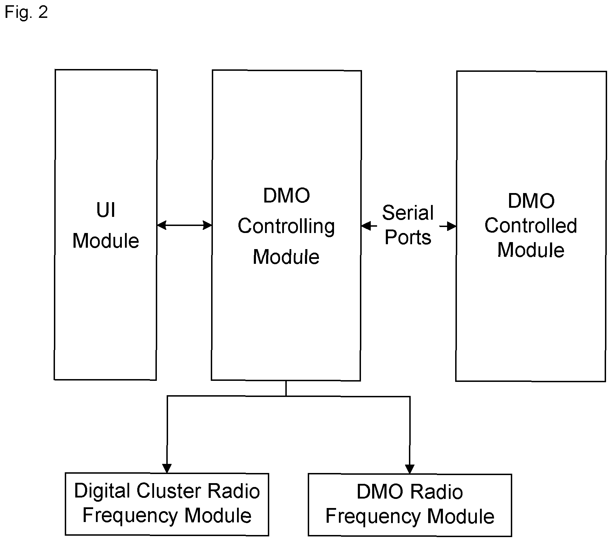

As shown in Fig. 2, the digital trunking terminal for implementing DMO communication according to the present invention comprises: a UI module, a DMO controlling module and a DMO controlled module connected with each other through a serial port, a DMO radio frequency module and a digital trunking radio frequency module.

The UI module is arranged for sending a DMO starting command sent by a user to the DMO controlling module, and further for sending frequency point information set by the user to the DMO controlling module after being informed that a the DMO controlling module has successfully established a connection with the DMO controlled module.

The DMO controlling module is arranged for instructing to close the digital trunking radio frequency module after receiving the DMO starting command, and establishing a connection with the DMO controlled module; further for informing the UI module after the connection is established successfully; further for sending the received frequency point information to the DMO controlled module; and further for instructing to open the DMO radio frequency module after instructing to close the digital trunking radio frequency module.

The DMO controlled module is arranged for setting a parameter of itself according to the received frequency point information.

Further, the DMO controlled module is further arranged for sending a group setting success response to the DMO controlling module after setting the parameter of itself successfully; the DMO controlling module is further arranged for sending the received group setting success response to the UI module; and

the UI module is further arranged for informing the user that the digital trunking terminal has entered a DMO communication free state after receiving the group setting success response.

The DMO controlling module is further arranged for opening the DMO controlled module and the serial port connected with the DMO controlled module when receiving the DMO starting command sent by the user through the UI module; and further for sending a connection command to the DMO controlled module through the serial port.

The DMO controlled module is further arranged for sending a group setting failure response to the DMO controlling module when failing to set the parameter; and the DMO controlling module is further arranged for sending the group setting failure response to the UI module, closing the DMO controlled module and the DMO radio frequency module, and instructing to open the digital trunking radio frequency module.

The DMO controlling module is further arranged for instructing the serial port to perform initialization.

The DMO controlling module is further arranged for informing the UI module that the connection has been established successfully after receiving a connection command response from the DMO controlled module.

The digital trunking terminal further comprises a connection timer, and the connection timer is preset with a connection timeout and connection timeout times;
the DMO controlling module is further arranged for starting the connection timer when sending the connection command to the DMO controlled module; the DMO controlling module is further arranged for sending the connection command to the DMO controlled module and determining whether the connection command response returned by the DMO controlled module is received within the connection timeout, if the connection command response returned by the DMO controlled module is received within the connection timeout, it indicates that the DMO controlling module has successfully established the connection with the DMO controlled module, if the connection command response returned by the DMO controlled module has not been received yet when the connection timeout is up, then the DMO controlling module determines whether the times of sending the connection command are beyond the connection timeout times, if beyond, it indicates that the DMO controlling module is failed to establish the connection with the DMO controlled module, otherwise, the connection command is sent to the DMO controlled module again.

The UI module is further arranged for sending a subaudio frequency, a squelch level and the frequency point information, which are set by the user, to the DMO controlling module; the DMO controlling module is further arranged for sending the received subaudio frequency, squelch level and frequency point information to the DMO controlled module; and the DMO controlled module is further arranged for setting a parameter of itself according to the subaudio frequency, the squelch level and the frequency point information.

## Claims

1. A method for implementing Direct Mode Operation, DMO, communication on a digital trunking terminal, comprising:
after the digital trunking terminal is started and when a DMO controlling module thereof receives a DMO starting command sent by a user through a User Interface, UI, module, sending a close instruction, by the DMO controlling module, to a digital trunking radio frequency module so as to close the digital trunking radio frequency module;
when the digital trunking radio frequency module is closed, sending, by the DMO controlling module, an open instruction to a DMO radio frequency module to open the DMO radio frequency module;
establishing, by the DMO controlling module, a connection with a DMO controlled module, and informing, by the DMO controlling module, the UI module after the connection is established successfully;
sending, by the UI module, a subaudio frequency, a squelch level and a frequency point information which is set by the user to the DMO controlled module through the DMO controlling module,
setting, by the DMO controlled module, the subaudio frequency, the squelch level and a frequency parameter of itself to be the subaudio frequency, the squelch level and the frequency point information received from the DMO controlling module; and
the digital trunking terminal enters into a DMO communication free state.

2. The method according to claim 1, further comprising:
sending by the DMO controlled module a group setting success response to the UI module through the DMO controlling module after the DMO controlled module sets the parameter successfully; and
prompting by the UI module the user that the digital trunking terminal has entered the DMO communication free state after the UI module receives the group setting success response.

3. The method according to claim 1, wherein the establishing the connection by the DMO controlling module with the DMO controlled module specifically comprises:
when the DMO controlling module receives the DMO starting command sent by the user through the UI module, opening the DMO controlled module and a serial port connected with the DMO controlled module; and
sending by the DMO controlling module a connection command to the DMO controlled module through the serial port.

4. The method according to claim 1, further comprising:
if the DMO controlled module is failed to set the parameter, sending a group setting failure response to the DMO controlling module; and
sending the group setting failure response to the UI module, closing the DMO controlled module and the DMO radio frequency module, and instructing to open the digital trunking radio frequency module by the DMO controlling module.

5. The method according to claim 3, further comprising:
instructing by the DMO controlling module the serial port to perform initialization after the digital trunking terminal is started and before the DMO controlling module opens the serial port connected with the DMO controlled module..

6. The method according to claim 1, wherein the informing the UI module by the DMO controlling module after the connection is established successfully specifically comprises:
informing the UI module by the DMO controlling module that the connection has been established successfully after the DMO controlling module receives a connection command response from the DMO controlled module.

7. The method according to any one of claims 1 to 6, further comprising:
configuring a connection timer in the digital trunking terminal, the connection timer being preset with a connection timeout and connection timeout times;
starting the connection timer when the DMO controlling module sends the connection command to the DMO controlled module; and
the establishing by the DMO controlling module the connection with the DMO controlled module specifically comprises:
sending the connection command to the DMO controlled module by the DMO controlling module and determining by the DMO controlling module whether the connection command response returned by the DMO controlled module is received within the connection timeout, if the connection command response returned by the DMO controlled module is received within the connection timeout, it indicates that the DMO controlling module has successfully established the connection with the DMO controlled module;
if the connection command response returned by the DMO controlled module has not been received yet when the connection timeout is up, determining whether times of sending the connection command are beyond the connection timeout times, if beyond, it indicates that the DMO controlling module is failed to establish the connection with the DMO controlled module, if not, the sending of the connection command and the subsequent determining flow are repeated.

8. A digital trunking terminal for implementing Direct Mode Operation, DMO, communication, comprising:
a User Interface, UI, module, a DMO controlling module, a DMO controlled module, a DMO radio frequency module and a digital trunking radio frequency module;
wherein the UI module is adapted to send a DMO starting command sent by a user to the DMO controlling module; and further adapted to send a subaudio frequency, a squelch level and a frequency point information which is set by the user to the DMO controlling module after being informed that the DMO controlling module has successfully established a connection with the DMO controlled module;
the DMO controlling module is adapted to send a close instruction to the digital trunking radio frequency module so as to close the digital trunking radio frequency module after receiving an DMO starting command, and send an open instruction to the DMO radio frequency module to open the DMO radio frequency module when the digital trunking radio frequency module is closed; and establish the connection with the DMO controlled module; further adapted to inform the UI module after the connection is established successfully; further adapted to send the subaudio frequency, the squelch level and the frequency point information received from the UI module to the DMO controlled module; and
the DMO controlled module is adapted to set the subaudio frequency, the squelch level and a frequency parameter of itself to be the subaudio frequency, the squelch level and the frequency point information received from the DMO controlling module, and enter a DMO communication free state.

9. The digital trunking terminal according to claim 8, wherein
the DMO controlled module is further adapted to send a group setting success response to the DMO controlling module after setting the parameter of itself successfully;
the DMO controlling module is further adapted to send the received group setting success response to the UI module; and
the UI module is further adapted to prompt the user that the digital trunking terminal has entered the DMO communication free state after receiving the group setting success response.

10. The digital trunking terminal according to claim 8, wherein
the DMO controlling module is further adapted to open the DMO controlled module and a serial port connected with the DMO controlled module when receiving the DMO starting command sent by the user through the UI module; and further adapted to send a connection command to the DMO controlled module through the serial port.

11. The digital trunking terminal according to claim 8, wherein
the DMO controlled module is further adapted to send a group setting failure response to the DMO controlling module when failing to set the parameter of itself;
the DMO controlling module is further adapted to send the group setting failure response to the UI module, close the DMO controlled module and the DMO radio frequency module, and instruct to open the digital trunking radio frequency module.

12. The digital trunking terminal according to claim 10, wherein the DMO controlling module is further adapted to instruct the serial port to perform initialization.

13. The digital trunking terminal according to claim 8, wherein the DMO controlling module is further adapted to inform the UI module that the connection has been established successfully after receiving a connection command response from the DMO controlled module.

14. The digital trunking terminal according to any one of claims 8 to 13, wherein
the digital trunking terminal further comprises a connection timer, and the connection timer is preset with a connection timeout and connection timeout times;
the DMO controlling module is further adapted to start the connection timer when sending the connection command to the DMO controlled module; and
the DMO controlling module is further adapted to send the connection command to the DMO controlled module, and determine whether the connection command response returned by the DMO controlled module is received within the connection timeout, if the connection command response returned by the DMO controlled module is received within the connection timeout, it indicates that the DMO controlling module has successfully established the connection with the DMO controlled module, if the connection command response returned by the DMO controlled module has not been received yet when the connection timeout is up, the DMO controlling module determines whether times of sending the connection command are beyond the connection timeout times, if beyond, it indicates that the DMO controlling module is failed to establish the connection with the DMO controlled module, if not, the connection command is sent again to the DMO controlled module.

## Patentansprüche

1. Ein Verfahren zur Implementierung von Kommunikation im Direktmodus-Betrieb (Direct Mode Operation, DMO) auf einem digitalen Trunking-Terminal, umfassend:
nachdem das digitale Trunking-Terminal gestartet wurde und wenn ein DMO-Steuerungsmodul hiervon einen DMO-Startbefehl erhält, der von einem Benutzer über ein Benutzerschnittstellenmodul (User Interface, UI) gesendet wird; mittels des DMO-Steuerungsmoduls eine Schließungs-Anweisung an ein digitales Trunking-Hochfrequenzmodul zu senden, um das digitale Trunking-Hochfrequenzmodul zu schließen;
wenn das digitale Trunking-Hochfrequenzmodul geschlossen ist, mittels des DMO-Steuerungsmoduls eine Öffnungs-Anweisung an ein DMO-Hochfrequenzmodul zu senden, um das DMO-Hochfrequenzmodul zu öffnen;
mittels des DMO-Steuerungsmoduls eine Verbindung mit einem DMO-gesteuerten Modul herzustellen und das UI-Modul mittels des DMO-Steuerungsmoduls zu informieren, nachdem die Verbindung erfolgreich hergestellt wurde;
mittels des UI-Moduls eine Subaudio-Frequenz, einen Squelchpegel und eine durch den Benutzer festgelegte Frequenzpunktinformation durch das DMO-Steuerungsmodul an das DMO-gesteuerte Modul zu senden,
mittels des DMO-gesteuerten Moduls die Subaudio-Frequenz, den Squelchpegel und einen Frequenzparameter von sich aus als die Subaudio-Frequenz, den Squelch-Pegel und die vom DMO-Steuerungsmodul empfangene Frequenzpunktinformation festzulegen; und
das digitale Trunking-Terminal tritt in einen DMO-kommunikationsfreien Zustand ein.

2. Das Verfahren gemäß Anspruch 1, ferner umfassend:
mittels des DMO-gesteuerten Moduls durch das DMO-Steuerungsmodul eine Gruppeneinstellungs-Erfolgsrückmeldung an das UI-Modul zu senden, nachdem das DMO-gesteuerte Modul den Parameter erfolgreich eingestellt hat; und
mittels des UI-Moduls dem Benutzer mitzuteilen, dass das digitale Trunking-Terminal in den DMO-kommunikationfreien Zustand eingetreten ist, nachdem das UI-Modul die Gruppeneinstellungs-Erfolgsrückmeldung erhalten hat.

3. Das Verfahren gemäß Anspruch 1, wobei die Herstellung der Verbindung mit dem DMO-gesteuerten Modul mittels des DMO-Steuerungsmoduls insbesondere Folgendes umfasst:
wenn das DMO-Steuerungsmodul den von dem Benutzer durch das UI-Modul gesendeten DMO-Startbefehl empfängt, das DMO-gesteuerte Modul und eine mit dem DMO-gesteuerten Modul verbundene serielle Schnittstelle zu öffnen; und
mittels des DMO-Steuerungsmoduls einen Verbindungsbefehl durch die serielle Schnittstelle an das DMO-gesteuerte Modul zu senden.

4. Das Verfahren gemäß Anspruch 1, ferner umfassend:
wenn es dem DMO-gesteuerte Modul misslingt, den Parameter einzustellen, eine gruppenbestimmende Misserfolgsrückmeldung an das DMO-Steuerungsmodul zu senden; und
die GruppeneinstellungsFehlerrückmeldung an das UI-Modul zu senden, das DMO-gesteuerte Modul und das DMO-Hochfrequenzmodul zu schließen, und Anweisung zu geben, das digitale Trunking-Hochfrequenzmodul mittels des DMO-Steuerungsmoduls zu öffnen.

5. Das Verfahren gemäß Anspruch 3, ferner umfassend:
mittels des DMO-Steuerungsmoduls die serielle Schnittstelle anzuweisen, eine Initialisierung durchzuführen, nachdem das digitale Trunking-Terminal gestartet wurde und bevor das DMO-Steuerungsmodul die mit dem DMO-gesteuerten Modul verbundene serielle Schnittstelle öffnet.

6. Das Verfahren gemäß Anspruch 1, wobei die Informierung des UI-Moduls mittels des DMO-Steuerungsmoduls, nachdem die Verbindung erfolgreich hergestellt wurde, insbesondere Folgendes umfasst:
Informieren des UI-Moduls mittels des DMO-Steuerungsmoduls, dass die Verbindung erfolgreich hergestellt wurde, nachdem das DMO-Steuerungsmodul eine Verbindungsbefehlsrückmeldung von dem DMO-gesteuerten Modul erhalten hat.

7. Das Verfahren gemäß einem der Ansprüche 1 bis 6, weiterhin umfassend:
einen Verbindungstimer im digitalen Trunking-Terminal zu konfigurieren, wobei der Verbindungstimer mit einem Verbindungs-Timeout und Verbindungs-Timeout-Zeiten voreingestellt ist;
den Verbindungstimer zu starten, wenn das DMO-Steuerungsmodul den Verbindungsbefehl an das DMO-gesteuerte Modul sendet; und
die Herstellung der Verbindung mit dem DMO-gesteuerten Modul mittels des DMO-Steuerungsmoduls umfasst Folgendes:
mittels des DMO-Steuerungsmoduls den Verbindungsbefehl an das DMO-gesteuerte Modul zu senden und mittels des DMO-Steuerungsmoduls zu bestimmen, ob die vom DMO-gesteuerten Modul zurückgegebene Verbindungsbefehlsrückmeldung innerhalb des Verbindungs-Timeouts empfangen wurde, wenn die vom DMO-gesteuerten Modul zurückgegebene Verbindungsbefehlsrückmeldung innerhalb des Verbindungs-Timeouts empfangen wird, zeigt es an, dass das DMO-Steuerungsmodul die Verbindung mit dem DMO-gesteuerten Modul erfolgreich hergestellt hat;
wenn die vom DMO-gesteuerten Modul zurückgegebene Verbindungsbefehlsrückmeldung noch nicht empfangen wurde, wenn der Verbindungs-Timeout abgelaufen ist, zu ermitteln, ob die Sendezeiten des Verbindungsbefehls über den Verbindungs-Timeout-Zeiten liegen, wenn sie darüber liegen, zeigt es an, dass es dem DMO-Steuerungsmodul misslungen ist, die Verbindung mit dem DMO-gesteuerten Modul herzustellen, wenn nicht, werden das Senden des Verbindungsbefehls und der anschließende Ermittlungsablauf wiederholt.

8. Ein digitales Trunking-Terminal zur Implementierung von Kommunikation im Direktmodus-Betrieb (Direct Mode Operation, DMO), aufweisend: ein Benutzerschnittstellenmodul (User Interface, UI), ein DMO-Steuerungsmodul, ein DMO-gesteuertes Modul, ein DMO-Hochfrequenzmodul, und ein digitales Trunking-Hochfrequenzmodul;
wobei das UI-Modul so angepasst ist, um einen von einem Benutzer gesendeten DMO-Startbefehl an das DMO-Steuerungsmodul zu senden; und weiter angepasst ist, um eine Subaudio-Frequenz, einen Squelchpegel und eine durch den Benutzer festgelegte Frequenzpunktinformation an das DMO-Steuerungsmodul zu senden, nachdem es informiert wurde, dass das DMO-Steuerungsmodul erfolgreich eine Verbindung mit dem DMO-gesteuerten Modul hergestellt hat;
das DMO-Steuerungsmodul ist so angepasst, um eine Schließungs-Anweisung an das digitale Trunking-Hochfrequenzmodul zu senden, nach dem Empfang eines DMO-Startbefehls das digitale Trunking-Hochfrequenzmodul zu schließen und eine Öffnungs-Anweisung an das DMO-Hochfrequenzmodul zu senden, das DMO-Hochfrequenzmodul zu öffnen, wenn das digitale Trunking-Hochfrequenzmodul geschlossen ist; und die Verbindung mit dem DMO-gesteuerten Modul herzustellen; es ist weiter angepasst, das UI-Modul zu informieren, nachdem die Verbindung erfolgreich hergestellt wurde; und weiter angepasst, die Subaudio-Frequenz, den Squelchpegel und die vom UI-Modul erhaltene Frequenzpunktinformation an das DMO-gesteuerte Modul zu senden; und
das DMO-gesteuerte Modul ist so angepasst, um die Subaudio-Frequenz, den Squelchpegel und einen Frequenzparameter von selbst als Subaudio-Frequenz, den Squelchpegel und die vom DMO-Steuerungsmodul erhaltene Frequenzpunktinformation einzustellen, und in einen DMO-kommunikationsfreien Zustand einzutreten.

9. Das digitale Trunking-Terminal gemäß Anspruch 8, wobei
das DMO-gesteuerte Modul ferner angepasst ist, GruppeneinstellungsErfolgsrückmeldung an das DMO-Steuerungsmodul zu senden, nachdem es von selbst den Parameter erfolgreich eingestellt hat;
das DMO-Steuerungsmodul ist ferner angepasst, um die empfangene Gruppeneinstellungs-Erfolgsrückmeldung an das UI-Modul zu senden; und
das UI-Modul ist weiter angepasst, dem Benutzer mitzuteilen, dass das digitale Trunking-Terminal in den DMO-kommunikationsfreien Zustand eingetreten ist, nachdem es die Gruppeneinstellungs-Erfolgsrückmeldung erhalten hat.

10. Das digitale Trunking-Terminal gemäß Anspruch 8, wobei
das DMO-Steuerungsmodul ferner angepasst ist, um das DMO-gesteuerte Modul und eine mit dem DMO-gesteuerten Modul verbundene serielle Schnittstelle zu öffnen, wenn es den von dem Benutzer durch das UI-Modul gesendeten DMO-Startbefehl erhält; und ferner angepasst ist, um einen Verbindungsbefehl an das DMO-gesteuerte Modul durch die serielle Schnittstelle zu senden.

11. Das digitale Trunking-Terminal gemäß Anspruch 8, wobei
das DMO-gesteuerte Modul ferner angepasst ist, um eine Gruppeneinstellungs-Fehlerrückmeldung an das DMO-Steuerungsmodul zu senden, wenn es ihm misslungen ist, die Parameter selbst festzulegen;
das DMO-Steuerungsmodul ist ferner angepasst, um die Gruppeneinstellungs-Fehlerrückmeldung an das UI-Modul zu senden, das DMO-gesteuerte Modul und das DMO-Hochfrequenzmodul zu schließen und Anweisung zu geben, das digitale Trunking-Hochfrequenzmodul zu öffnen.

12. das digitale Trunking-Terminal gemäß Anspruch 10, wobei das DMO-Steuerungsmodul ferner angepasst ist, die serielle Schnittstelle anzuweisen, die Initialisierung durchzuführen.

13. Das digitale Trunking-Terminal gemäß Anspruch 8, wobei das DMO-Steuerungsmodul ferner angepasst ist, um das UI-Modul zu informieren, dass die Verbindung erfolgreich hergestellt wurde, nachdem es eine Verbindungsbefehlsrückmeldung vom DMO-gesteuerten Modul empfangen hat.

14. Das digitale Trunking-Terminal gemäß einem der Ansprüche 8 bis 13, wobei
das digitale Trunking-Terminal ferner einen Verbindungstimer umfasst, und der Verbindungstimer ist mit einem Verbindungs-Timeout und Verbindungs-Timeout-Zeiten voreingestellt;
das DMO-Steuerungsmodul ist ferner angepasst, den Verbindungstimer zu starten, während es den Verbindungsbefehl an das DMO-gesteuerte Modul sendet; und
das DMO-Steuerungsmodul ist ferner angepasst, um den Verbindungsbefehl an das DMO-gesteuerte Modul zu senden und zu bestimmen, ob der vom DMO-gesteuerten Modul zurückgegebene Verbindungsbefehl innerhalb des Verbindungs-Timeouts empfangen wird, wenn der vom DMO-gesteuerten Modul zurückgegebene Verbindungsbefehl innerhalb des Verbindungs-Timeouts empfangen wird, zeigt es an, dass das DMO-Steuerungsmodul die Verbindung mit dem DMO-gesteuerten Modul erfolgreich hergestellt hat, wenn der vom DMO-gesteuerten Modul zurückgegebene Verbindungsbefehl noch nicht empfangen wurde, wenn der Verbindungs-Timeout abgelaufen ist, ermittelt des DMO-Steuerungsmodul, ob die Sendezeiten des Verbindungsbefehls über den Verbindungs-Timeout-Zeiten liegen, wenn sie darüber liegen, zeigt es an, dass es dem DMO-Steuerungsmodul misslungen ist, die Verbindung mit dem DMO-gesteuerten Modul herzustellen, wenn nicht, wird der Verbindungsbefehl erneut zum DMO-gesteuerten Modul gesendet.

## Revendications

1. Procédé pour implémenter une communication à fonctionnement en mode direct, DMO, sur un terminal de communication numérique, comprenant de :
après le démarrage du terminal de communication numérique et lorsqu'un module de commande DMO de ce dernier reçoit une commande de démarrage DMO envoyée par un utilisateur à travers un module d'interface d'utilisateur UI, envoyer une instruction de fermeture, par le module de commande DMO, à un module de radiofréquence de communication numérique de manière à fermer le module de radiofréquence de communication numérique ;
lorsque le module de radiofréquence de communication numérique est fermé, envoyer, par le module de commande DMO, une instruction d'ouverture à un module de radiofréquence DMO pour ouvrir le module de radiofréquence DMO ;
établir, par le module de commande DMO, une connexion avec un module commandé DMO et informer, par le module de commande DMO, le module UI après que la connexion a été établie avec succès ;
envoyer, par le module UI, une fréquence sous-audio, un niveau d'accord silencieux et une information de point de fréquence qui est réglée par l'utilisateur au module commandé DMO par l'intermédiaire du module de commande DMO,
régler, par le module commandé DMO, la fréquence sous-audio, le niveau d'accord silencieux et un paramètre de fréquence de lui-même afin qu'ils soient la fréquence sous-audio, le niveau d'accord silencieux et l'information de point de fréquence reçus du module de commande DMO ; et
le terminal de communication numérique entre dans un état exempt de communication DMO.

2. Procédé selon la revendication 1, comprenant en outre de :
envoyer par le module commandé DMO une réponse de réussite de réglage de groupe au module UI par l'intermédiaire du module de commande DMO après que le module commandé DMO règle le paramètre avec succès ; et
communiquer par le module UI à l'utilisateur que le terminal de communication numérique est entré dans le mode exempt de communication DMO après que le module UI reçoit la réponse de réussite de réglage de groupe.

3. Procédé selon la revendication 1, dans lequel l'établissement de la connexion par le module de commande DMO avec le module commandé DMO comprend spécifiquement de :
lorsque le module de commande DMO reçoit la commande de démarrage DMO envoyée par l'utilisateur par l'intermédiaire du module UI, ouvrir le module commandé DMO et un port sériel connecté avec le module commandé DMO ; et
envoyer par le module de commande DMO une commande de connexion au module de commandé DMO à travers le port sériel.

4. Procédé selon la revendication 1, comprenant en outre de :
si le module commandé DMO a échoué à régler le paramètre, envoyer une réponse d'échec de réglage de groupe au module de commande DMO ; et
envoyer la réponse d'échec de réglage de groupe au module UI, fermant le module commandé DMO et le module de radiofréquence DMO et donnant instructions d'ouvrir le module de radiofréquence de communication numérique par le module de commande DMO.

5. Procédé selon la revendication 3, comprenant en outre de :
donner instruction par le module de commande DMO au port sériel d'effectuer l'initialisation après le démarrage du terminal de communication numérique et avant que le module de commande DMO ouvre le port sériel connecté avec le module commandé DMO.

6. Procédé selon la revendication 1, dans lequel informer le module UI par le module de commande DMO après que la connexion a été établir avec succès comprend spécifiquement de :
informer le module UI par le module de commande DMO que la connexion a été établie avec succès après que le module de commande DMO reçoit une réponse de commande de connexion provenant du module commandé DMO.

7. Procédé selon une quelconque des revendications 1 à 6, comprenant en outre de :
configurer un temporisateur de connexion dans le terminal de communication numérique, le temporisateur de connexion étant préréglé avec une temporisation de connexion et des temps de temporisation de connexion ;
démarrer le temporisateur de connexion lorsque le module de commande DMO envoie la commande de connexion au module commandé DMO ; et
l'établissement par le module de commande DMO de la connexion avec le module commandé DMO comprend spécifiquement de :
envoyer la commande de connexion au module commandé DMO par le module de commande DMO et déterminer par le module de commande DMO si la réponse de commande de connexion renvoyée par le module commandé DMO est reçu à l'intérieur de la temporisation de connexion, si la réponse de commande de connexion renvoyée par le module commandé DMO est reçu à l'intérieur de la temporisation de connexion, cela indique que le module de commande DMO a établi avec succès la connexion avec le module commandé DMO ;
si la réponse de commande de connexion renvoyée par le module commandé DMO n'a pas encore été reçue lorsque la temporisation de connexion est active, déterminer si les temps d'envoi de la commande de connexion sont au-delà des temps de temporisation de connexion, si ils sont au-delà, cela indique que le module de commande DMO a échoué à établir la connexion avec le module commandé DMO, sinon, l'envoi de la commande de connexion et du flux de détermination subséquent sont répétés.

8. Terminal de communication numérique pour implémenter une communication à fonctionnement en mode direct DMO, comprenant : un module d'interface d'utilisateur UI, un module de commande DMO, un module commandé DMO, un module de radiofréquence DMO et un module de radiofréquence de communication numérique ;
dans lequel le module UI est adapté pour envoyer une commande de démarrage DMO envoyée par un utilisateur au module de commande DMO ; et en outre adapté pour envoyer une fréquence sous-audio, un niveau d'accord silencieux et une information de point de fréquence qui est réglée par l'utilisateur au module commandé DMO après avoir été informé que le module de commande DMO a établi avec succès une connexion avec le module commandé DMO ;
le module de commande DMO est adapté pour envoyer une instruction de fermeture au module de radiofréquence de communication numérique de manière à fermer le module de radiofréquence de communication numérique après la réception d'une commande de démarrage DMO, et envoyer une instruction d'ouverture au module de radiofréquence DMO afin d'ouvrir le module de radiofréquence DMO lorsque le module de radiofréquence de communication numérique est fermé ; et établir la connexion avec le module commandé DMO ; adapté en outre pour informer le module UI après l'établissement réussi de la connexion ; adapté en outre pour envoyer la fréquence sous-audio, le niveau d'accord silencieux et l'information de point de fréquence reçus du module UI au module commandé DMO ; et
le module commandé DMO est adapté pour régler la fréquence sous-audio, le niveau d'accord silencieux et un paramètre de fréquence de lui-même afin qu'ils soient la fréquence sous-audio, le niveau d'accord silencieux et l'information de point de fréquence reçus du module de commande DMO, et entrer dans un état exempt de communication DMO.

9. Terminal de communication numérique selon la revendication 8, dans lequel
le module commandé DMO est en outre adapté pour envoyer une réponse de réussite de réglage de groupe au module de commande DMO après le réglage réussi du paramètre de lui-même ;
le module de commande DMO est en outre adapté pour envoyer la réponse de réussite de réglage de groupe reçu au module UI ; et
le module UI est en outre adapté pour communiquer à l'utilisateur que le terminal de communication numérique est entré dans le mode exempt de communication DMO après la réception de la réponse de réussite de réglage de groupe.

10. Terminal de communication numérique selon la revendication 8, dans lequel
le module de commande DMO est en outre adapté pour ouvrir le module commandé DMO et un port sériel connecté au module commandé DMO lors de la réception de la commande de démarrage DMO envoyé par l'utilisateur par l'intermédiaire du module UI ; et adapté en outre pour envoyer une commande de connexion au module commandé DMO à travers le port sériel.

11. Terminal de communication numérique selon la revendication 8, dans lequel
le module commandé DMO est en outre adapté pour envoyer une réponse d'échec de réglage de groupe au module de commande DMO lors d'un échec à régler le paramètre de lui-même ;
le module de commande DMO est en outre adapté pour envoyer la réponse d'échec de réglage de groupe au module UI, fermer le module commandé DMO et le module de radiofréquence DMO et donner instruction d'ouvrir le module de radiofréquence de communication numérique.

12. Terminal de communication numérique selon la revendication 10, dans lequel le module de commande DMO est en outre adapté pour donner instruction au port sériel d'effectuer l'initialisation.

13. Terminal de communication numérique selon la revendication 8, dans lequel le module de commande DMO est en outre adapté pour informer le module UI que la connexion a été établie avec succès après la réception d'une réponse de commande de connexion provenant du module commandé DMO.

14. Terminal de communication numérique selon une quelconque des revendications 8 à 13, dans lequel
le terminal de communication numérique comprend en outre un temporisateur de connexion et le temporisateur de connexion est préréglé avec une temporisation de connexion et des temps de temporisation de connexion ;
le module de commande DMO est en outre adapté pour démarrer le temporisateur de connexion lors de l'envoi de la commande de connexion au module commandé DMO ; et
le module de commande DMO est en outre adapté pour envoyer la commande de connexion au module commandé DMO et déterminer si la réponse de commande de connexion renvoyée par le module commandé DMO est reçu à l'intérieur de la temporisation de connexion, si la réponse de commande de connexion renvoyée par le module commandé DMO est reçu à l'intérieur de la temporisation de connexion, cela indique que le module de commande DMO a établi avec succès la connexion avec le module commandé DMO, si la réponse de commande de connexion renvoyée par le module commandé DMO n'a pas encore été reçu lorsque la temporisation de connexion est active, le module de commande DMO détermine si les temps d'envoi de la commande de connexion sont au-delà des temps de temporisation de connexion, si au-delà, cela indique que le module de commande DMO a échoué à établir la connexion avec le module de commande DMO, sinon, la commande de connexion est envoyée à nouveau au module commandé DMO.
